# EUROPÄISCHE PATENTANMELDUNG

(11) **EP 1 980 829 A2**
(43) Veröffentlichungstag der Anmeldung: **15.10.2008**
(21) Anmeldenummer: 08154249.0
(22) Anmeldetag: 09.04.2008
(51) Int. Cl.: G01G 21/28

(54) **Elektronische Waage**

(30) Priorität: 10.04.2007 DE 102007017103
(71) Anmelder: Mettler-Toledo AG, 8606 Greifensee (CH)
(72) Erfinder: Nufer, Bruno, 8308, Illnau (CH); Zeiss, Siegfried, 8633, Wolfhausen (CH)

(57) **Zusammenfassung**

Elektronische Waage aufweisend einen Lastträger (3) mit einer ersten Aufnahme (4), eine Transfereinrichtung (6) mit einer zweiten Aufnahme (7), und einen Wägeraum (15), welcher einen Einsatz (50) aufweist, wobei eine Beschickungsöffnung (14) des Wägeraum (15) mit einem Verschlusselement (13) verschliessbar ist, dadurch gekennzeichnet, dass die erste Aufnahme (4) und die zweite Aufnahme (7) während des Wiegens im Wägeraum (15), insbesondere im Einsatz (50), angeordnet sind, und dass der Einsatz (50) und/oder das Verschlusselement (13) manuell oder automatisiert austauschbar ist.

## Beschreibung

Die Erfindung bezieht sich auf eine elektronische Waage mit einem Wägeraum, welcher einen Einsatz und eine durch ein Verschlusselement verschliessbare Beschickungsöffnung aufweist.

Ein Windschutz ist insbesondere bei Waagen, welche für die Wägung von kleinsten Lasten beispielsweise im Mikro- oder sogar Submikrogrammbereich ausgelegt sind, ein wichtiges Element, da in diesen Lastbereichen der Einfluss von kleinsten Änderungen, beispielsweise in der Luftbewegung, des Auftriebs, durch Temperaturschwankungen und/oder durch Erschütterungen, einen signifikanten Einfluss auf das Wägeergebnis haben kann. Zur Minimierung dieser Einflüsse ist es in der Regel notwendig, dass nach einer Beschickung der Waage die eigentliche Wägung mit einer gewissen Zeitverzögerung durchgeführt wird, damit sich vor allem die im Wägeraum eingeschlossene Luft wieder beruhigen kann und auch alle weiteren äusseren Parameter möglichst konstant sind.

Hochpräzise Waagen, so genannte Mikrowaagen, können unter anderem für die Kontrollwägung kleiner rohr- oder stangenförmiger Wägegüter eingesetzt werden. Bei derartigen Anwendungen sollen möglichst viele gleichartige Güter nacheinander in möglichst kurzer Zeit gewogen werden. Weitere Anwendungen können zum Beispiel auch Kontrollmessungen bestimmter Güter oder die Verfolgung von Gewichtsschwankungen eines oder mehrerer Wägegüter über eine bestimmte Zeitdauer umfassen, beispielsweise in der Qualitätssicherung.

Hochpräzise Waagen werden inzwischen nicht mehr nur im Labor, sondern immer mehr auch bei der Serien-Produktion kleinster Gegenstände, wie Filter, Implantate, Computer Chips und ähnlichem eingesetzt. Insbesondere in der Produktion wird an eine Waage einerseits der Anspruch gestellt, dass sie die geforderten Messgenauigkeiten gewährleistet, sowie schnell reproduzierbare Ergebnisse liefert, andererseits sollte eine Waage robust, einfach zu bedienen und leicht zu reinigen sein.

Die Anforderungen an die Ausgestaltung der Waage und insbesondere von Teilen, welche mit einem Wägegut in Kontakt gebracht werden können, steigen ständig, insbesondere in Einsatzgebieten mit strengen gesetzlichen Vorgaben, wie zum Beispiel in der Medizin, der Biochemie oder der Pharmazie. Zu diesen Anforderungen zählt beispielsweise das leichte Reinigen der mit einem Wägegut in Kontakt kommenden Teile der Waage und insbesondere des Wägeraums.

In der europäischen Patentanmeldung EP 07104592.6 wird beispielsweise eine mit einem Lastträger oder einer Transfereinrichtung verbindbare Aufnahme für ein Wägegut offenbart, welche besonders einfach und vor allem verkantungsfrei ausgetauscht werden kann. Die Aufnahme ist einstückig ausgestaltet und kann leicht gereinigt werden.

Neben der Aufnahme kann zum Beispiel auch ein Verschlusselement zum Öffnen oder Schliessen des Wägeraums oder auch das Innere des Wägeraums mit dem Wägegut in Kontakt kommen, zum Beispiel, wenn das Wägegut von der Aufnahme fällt oder beim Einbringen in den Wägeraum mit dem Verschlusselement in Kontakt kommt.

Daher wäre es vorteilhaft, wenn auch diese Teile leicht gereinigt werden können und sowohl physikalisch und/oder chemisch von Rückständen befreit und gegebenenfalls auch sterilisiert werden können, so dass sie zumindest den gesetzlich geforderten Anforderungen an Sauberkeit und/oder Hygiene genügen.

Gelöst wird diese Aufgabe durch eine elektronische Waage mit einem Lastträger und einer Transfereinrichtung. Der Lastträger ist mit einer ersten Aufnahme und die Transfereinrichtung ist mit einer zweiten Aufnahme für ein Wägegut verbindbar. Weiterhin weist die Waage einen Wägeraum mit einem Einsatz und einer Beschickungsöffnung auf, welche durch ein Verschlusselement verschliessbar ist. Während des Wiegens, also während eines Wägevorgangs, sind die erste Aufnahme und die zweite Aufnahme im Wägeraum, insbesondere im Einsatz angeordnet. Der Einsatz und/oder das Verschlusselement können manuell oder automatisiert ausgetauscht werden.

Das gewünschte leichte Reinigen der mit dem Wägegut in Kontakt kommenden Teile der Waage bedingt somit die Forderung nach einem einfachen und problemlosen Aus- und Einbau dieser Teile, wobei der Austausch selbstverständlich ohne Qualitätsverluste in Bezug auf das Messergebnis durchführbar sein sollte und weder die einzelnen Teile noch die Wägemechanik beeinflussen oder beschädigen sollte. Je nach Anwendungsgebiet und Empfindlichkeit der Waage ist es vorteilhaft, wenn der Austausch der möglicherweise mit dem Wägegut in Kontakt kommenden Teile manuell und/oder automatisch erfolgen kann.

Bekannte elektronische Waagen, beispielsweise Laborwaagen, Analysenwaagen oder Mikrowaagen, sind je nach Anwendungsbereich mit unterschiedlichen Windschutz-Varianten ausgestattet, wobei sowohl im Wesentlichen eckige als auch runde Varianten bekannt sind, welche in der Regel mindestens eine, meist verschliessbare, Beschickungsöffnung aufweisen.

Die Form und Dimensionen des Wägeraums und des Einsatzes können beispielsweise auch an das Wägegut angepasst werden. Dieses ist sehr vorteilhaft, da so das Gesamtvolumen des Wägeraums nur geringfügig grösser ausgestaltet werden kann, als das des Wägeguts. Dadurch wird automatisch auch das im Wägeraum befindliche Luftvolumen reduziert, wodurch sich die Zeit bis zur Einstellung konstanter äusserer Parameter, zu denen unter anderen der Luftdruck, die Luftbewegung und die Luftfeuchtigkeit zählen, reduzieren lässt. Eine Anpassung des Wägeraums an die Dimensionen eines zu bestimmenden Wägeguts ist insbesondere für die Verbesserung der Reproduzierbarkeit und die Verkürzung der Messzeiten bei Mehrfachmessungen vorteilhaft.

Das Verschlusselement weist mindestens ein Kupplungsteil auf, welches der Verbindung des Verschlusselements mit der Waage und insbesondere mit dem Windschutz dient. Als Gegenstück weist die Waage mindestens eine Vertiefung auf, welche das Kupplungsteil aufnehmen kann. Vorzugsweise weist die Waage zwei Vertiefungen zur Aufnahme von zwei Kupplungsteilen auf. Diese Vertiefung kann beispielsweise am Gehäuse der Waage oder am Windschutz angeordnet sein.

Das Kupplungsteil kann in der mindestens einen Vertiefung mit einer Verriegelung arretiert werden, so dass das Verschlusselement lösbar mit der Waage verbunden werden kann.

Besonders benutzerfreundlich im Hinblick auf den Austausch des Verschlusselements ist ein Verschlusselement, welches zwei Kupplungsteile aufweist, insbesondere in Kombination mit einer Verriegelung, welche einen drehbar gelagerten Balken oder Riegel aufweist, der die Vertiefungen freigeben oder verschliessen kann, so dass das Verschlusselement arretiert oder entfernt bzw. eingesetzt werden kann.

Ein Verschlusselement mit einem einzelnen, zum Beispiel stangenförmigen Kupplungsteil, kann durch eine als Schieber ausgestalteten Verriegelung arretiert werden, wobei die Bewegungsrichtung des Schiebers vorzugsweise senkrecht zur Längsachse des Kupplungsteils ausgerichtet werden sollte.

Zum einfachen Einsetzen oder Entfernen des Einsatzes kann der Wägeraum mindestens eine Aussparung aufweisen, welche so im Wägeraum angeordnet werden kann, dass ein Spalt zwischen der Wägeraumwand und dem Einsatz entsteht, in welche ein Greifelement, wie eine Pinzette oder ein automatisiertes Greifelement eingreifen kann und so den Einsatz festhalten und aus dem Wägeraum entfernen oder einbringen kann.

Eine weitere Ausgestaltung kann ein im oder am Einsatz angeordnetes Griffelement aufweisen. Die Form des Griffelements kann an die Form eines für den Austausch vorgesehen Geräts angepasst sein, beispielsweise eine Öse in die ein Haken oder eine Pinzette eingreifen kann. Weitere Ausgestaltungen können beispielsweise magnetische Griffe oder speziell ausgeformte Ösen oder Haken umfassen.

Der Einsatz und/oder das Verschlusselement sind vorzugsweise aus einem leicht zu reinigenden, chemisch beständigen Material gefertigt und können je nach Einsatzgebiet noch mit zusätzlichen Beschichtungen versehen werden. Als Materialien eignen sich beispielsweise rostfreie Edelstähle, Edelmetalle, Aluminium, Titan oder Kombinationen dieser Metalle.

Die elektronische Waage ist insbesondere zum automatischen Betrieb ausgelegt und weist daher ferner einen Antrieb für das Betätigen des Verschlusselements auf.

Der Antrieb weist zudem ein Stellglied auf und wirkt mit einem Übertragungselement zusammen. Die Transfereinrichtung kann durch das Zusammenwirken des Antriebs, des Stellglieds und des Übertragungselements relativ zum Lastträger bewegt werden.

Durch den Antrieb kann eine relative Bewegung der Transfereinrichtung zum Lastträger sowie ein kontrolliertes Öffnen und/oder Verschliessen der Beschickungsöffnung ausgelöst werden, wobei die Bewegung der Transfereinrichtung und das Öffnen und/oder Schliessen des Verschlusselements miteinander gekoppelt sind, damit der Wägeraum nur während des Einbringens des Wägeguts geöffnet ist.

Aufgrund der Ausgestaltung des Stellglieds kann die Transfereinrichtung in Relation zum Lastträger in verschiedenen, definierten Positionen, insbesondere in drei Positionen, positioniert werden. Mögliche Ausgestaltungen des Stellglieds umfassen dabei sowohl verschiedenartige Kurvenscheiben, Exzenter als auch einen linear verschieblichen Schieber.

In Abhängigkeit der Ausgestaltung des Stellglieds dient das Übertragungselement dazu, die Bewegung des Stellglieds in eine Hubbewegung der Transfereinrichtung in Relation zum Lastträger umzusetzen. Vorzugsweise ist das Übertragungselement mit der Transfereinrichtung verbunden oder an dieser angeordnet.

Für das Wägegut weist die elektronische Waage eine erste Aufnahme und eine zweite Aufnahme auf, wobei die erste Aufnahme mit dem Lastträger und die zweite Aufnahme mit der Transfereinrichtung verbindbar sind. Diese Aufnahmen können beispielsweise bekannten austauschbaren Aufnahmen oder den in der europäischen Patentanmeldung EP 07104592.6 offenbarten Aufnahmen entsprechen.

Die Aufnahmen sind vorzugsweise so ausgestaltet, dass bei einer Bewegung des Lastträgers in Relation zur Transfereinrichtung ein berührungsloses ineinander greifen bzw. durch einander hindurch greifen der beiden Aufnahmen zum Transfer einer zu wägenden Last ermöglicht wird.

In einem bevorzugten Ausführungsbeispiel weisen die Aufnahmen gabel- oder zinkenartige Vorsprünge aus, welche so angeordnet sind, dass die erste und zweite Aufnahme aneinander vorbei bzw. durch einander hindurch bewegt werden können. Sobald ein Wägegut auf einer der Aufnahmen platziert wird, kann diese durch das aneinander vorbei bewegen bzw. das durch einander hindurch greifen der Aufnahmen von einer Aufnahme zur anderen transferiert werden. Weitere Ausgestaltungen der Aufnahmen können unter anderen plattenartigen Strukturen mit nadel- oder stiftartigen Auflageelemente umfassen und/oder auch an bereits bekannte Aufnahmevarianten angelehnt sein.

Das Zusammenwirken von Antrieb, Verschlusselement, Transfereinrichtung und Lastträger wird im Folgenden kurz beschrieben.

Zunächst wird die Beschickungsöffnung durch Betätigung des Verschlusselements geöffnet und gleichzeitig eine ersten Position zwischen dem Lastträger und der Transfereinrichtung durch eine relative Bewegung derselben zueinander eingestellt Das zu bestimmende Wägegut kann in der ersten Position auf der Transfereinrichtung, genauer auf der damit verbundenen Aufnahme, angeordnet werden.

Anschliessend wird die Beschickungsöffnung geschlossen und gleichzeitig eine zweite Position, die Nullposition, zwischen dem Lastträger und der Transfereinrichtung durch eine relative Bewegung derselben zueinander eingestellt. In dieser Position wird ein Nullabgleich der Waage durchgeführt oder ein Nullwert in die Waage eingelesen. Vor und/oder nach dem Nullabgleich kann eine Überprüfung der Funktionsfähigkeit der Waage und der Wägeparameter durchgeführt werden. Diese Überprüfung kann beispielsweise eine Kalibrierung der Waage mit einem internen Kalibriergewicht, das Tarieren, das Justieren, eine Überprüfung des Luftdrucks oder anderer Parameter im Wägeraum und/oder das Einstellen verschiedener Parameter durch den Benutzer umfassen.

Nach Abschluss dieser Überprüfung kann das Wägegut durch ein weiteres aufeinander zu bewegen des Lastträgers relativ zur Transfereinrichtung von der Transfereinrichtung auf den Lastträger transferiert werden, wobei die Aufnahmen berührungslos durch einander hindurch greifen, und anschliessend das Wägegut gewogen wird. Lastträger und Transfereinrichtung befinden sich in einer dritter Position, der Wägeposition.

Nach Abschluss der Messung, wird das Wägegut durch eine umgekehrte Bewegungsabfolge des Lastträgers in Relation zur Transfereinrichtung wieder auf die Transfereinrichtung transferiert.

Das Überprüfen der Wägeparameter, das Auflegen des Wägeguts auf den Lastträger, das Wiegen, sowie das Abheben des Wägeguts kann so lange wiederholt werden, bis eine vorgegebene Anzahl von Wägungen durchgeführt wurde. Anschliessend wird die Beschickungsöffnung wieder geöffnet und die erste Position zwischen Lastträger und Transfereinrichtung durch eine relative Bewegung derselben zueinander eingestellt, so dass das Wägegut von der Transfereinrichtung entfernt werden kann. Das Auflegen eines Wägeguts auf die Transfereinrichtung und/oder das Entfernen eines Wägeguts von der Transfereinrichtung kann sowohl manuell als auch automatisiert geschehen, beispielsweise mittels eines geeigneten Roboters oder einer anderen bekannten Vorrichtung.

Das Öffnen und Schliessen der Beschickungsöffnung durch das Verschlusselement wird direkt und/oder indirekt durch den Antrieb bewirkt, welcher zusammenwirkend mit dem Stellglied und dem Übertragungselement auch das Einstellen der mindestens ersten, zweiten oder dritten Position zwischen dem Lastträger und der Transfereinrichtung bewirkt. Je nach Ausgestaltung des Verschlusselements und des Stellglieds können auch unterschiedliche Antriebe für das Stellglied und das Verschlusselement verwendet werden, welche koordiniert angesteuert werden.

Aufgrund der Ausgestaltung der Aufnahmen, des Verschlusselements und des Einsatzes können diese einfach ausgetauscht und gereinigt werden, was insbesondere für Anwendungen im Bereich der Medizin, Pharmazie und Biochemie von Interesse ist. Dabei kann der Benutzer je nach Anwendung die Teile beispielsweise nach jeder Messung oder in vorgegebenen Zeitintervallen austauschen.

Unterschiedliche Ausgestaltungen einer elektronischen Waage mit einem Windschutz werden anhand der Figuren näher erläutert, wobei gleiche Elemente mit identischen Bezugszeichen versehen sind.
- Fig. 1: Explosionszeichnung einer elektronischen Waage mit einem Windschutz, welche ein austauschbares Verschliesselement, einen austauschbaren Einsatz sowie austauschbare Aufnahmen aufweist;
- Fig. 2: Detailansicht einer Verriegelung zur Verbindung eines Verschlusselements mit einer elektronischen Waage
a) mit zwei Vertiefungen in einer AUF-Stellung und
b) mit einer Vertiefung in einer ZU-Stellung;
- Fig. 3: perspektivische Darstellung eines Verschlusselement mit zwei Kupplungsstellen;
- Fig. 4: Teilansicht einer elektronischen Waage mit einem ersten Windschutz im Schnitt, welche eine geöffnete Beschickungsöffnung aufweist, sowie einer Transfereinrichtung und einem Lastträger, welche eine erste Position zueinander einnehmen;
- Fig. 5: stark schematisierte Seitenansicht der Aufnahmen des Lastaufnehmers und der Transfereinrichtung, welche eine
a) erste,
b) zweite oder
c) dritte Position zueinander einnehmen;
- Fig. 6: Teilansicht einer elektronischen Waage mit einem zweiten Windschutz im Schnitt, welcher eine geöffnete Beschickungsöffnung aufweist, sowie eine Transfereinrichtung und einen Lastträger, welche eine erste Position zueinander einnehmen.

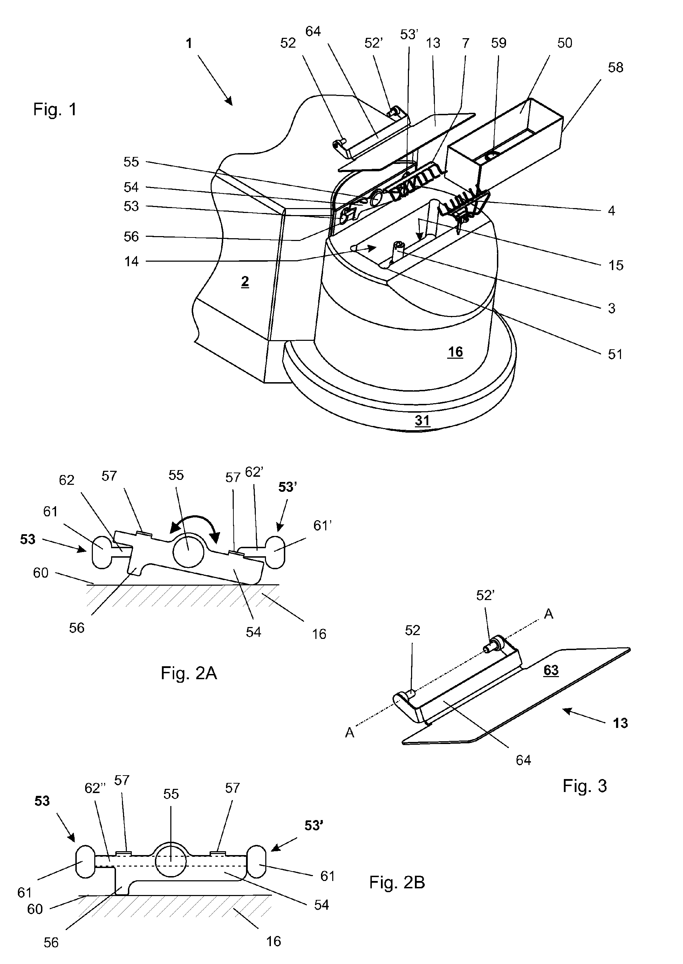

Figur 1 zeigt eine elektronische Waage 1 mit einem Windschutz 16, welche ein austauschbares Verschliesselement 13, einen austauschbaren Einsatz 50 sowie eine austauschbare erste Aufnahme 4 und eine austauschbare zweite Aufnahme 7 aufweist, in einer Explosionsdarstellung. In Figur 1 werden insbesondere die zur leichten Reinigung austauschbaren Elemente der Waage 1 beschrieben. Für eine genauere Beschreibung des Aufbaus und der Funktionsweise einer beispielhaften elektronischen Waage sei hier auf die Beschreibung der Figuren 3 bis 5 verwiesen.

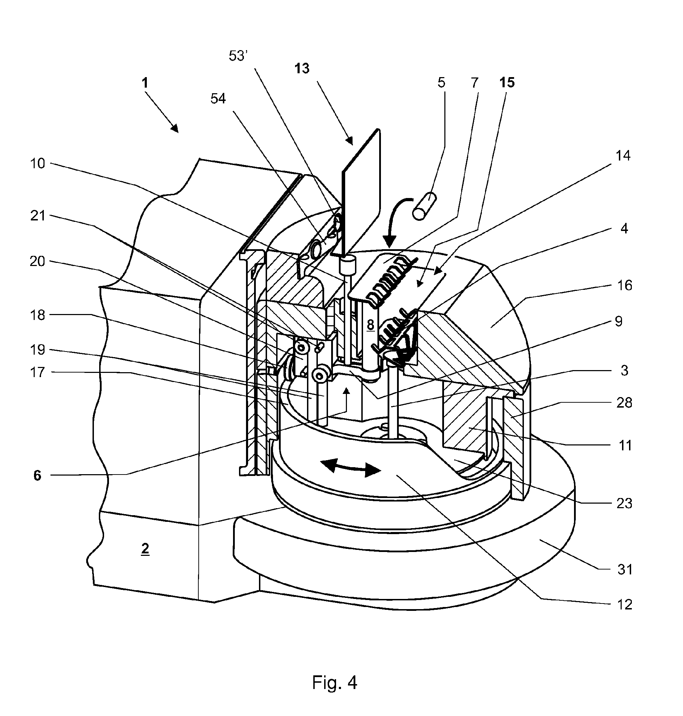

Der Windschutz 16 umschliesst einen Wägeraum 15, welcher eine Beschickungsöffnung 14 aufweist. Im Wägeraum 15 ist ein Lastträger 3 und eine hier nicht zu sehende Transfereinrichtung zumindest teilweise angeordnet (s. a. Figur 4).

Der Wägeraum 15 ist hier im Wesentlichen rechteckig ausgebildet, wobei mindestens eine Ecke, in diesem Beispiel sogar alle vier Ecken, mit einer zusätzlichen runden Vertiefung 51 versehen sind.

Der Einsatz 50 ist an die Form und Dimensionen des Wägeraums 15 angepasst, wobei der Einsatz 50 jedoch nahezu rechtwinkelige Ecken 58 aufweist, so dass wenn der Einsatz 50 in den Wägeraum 15 eingesetzt wird, die Vertiefungen 51 frei bleiben, also nicht durch den Einsatz 50 ausgefüllt werden, so dass ein Greifmittel, wie eine Pinzette oder eine entsprechend ausgebildete automatisierte Einheit die Wand des Einsatzes 50 zum Einsetzen oder Entfernen greifen kann.

Weiterhin weist der Einsatz 50 zwei Durchführungen 59 (nur eine ist zu sehen) auf, durch die der Lastträger 3 und die Transfereinheit in den Wägeraum 15 hineinragen, wenn der Einsatz 50 im Wägeraum 15 angeordnet ist.

Das Verschlusselement 13 weist an seinem einem Gehäuse 2 der Waage 1 zugewandten Ende zwei Kupplungsteile 52, 52' auf. Die Kupplungsteile 52, 52' sind in Bezug auf die Ausdehnung des Verschlusselements 13 nach innen gerichtet und so ausgestaltet, dass das Verschlusselement 13 eine Drehbewegung ausführen kann, bei der die sich zwischen den beiden Kupplungsteilen 52, 52' erstreckende Achse als Drehachse wirkt.

Zur Verbindung des Verschlusselements 13 mit der Waage 1 und insbesondere mit dem Gehäuse 2 dient mindestens eine Vertiefung 53, 53', welche hier als zwei spiegelbildlich zueinander angeordnete Vertiefungen 53, 53' dargestellt sind.

Zwischen den beiden Vertiefungen 53, 53' ist eine Verriegelung 54 angeordnet, welcher die Vertiefungen 53, 53' teilweise abdecken kann und so das Verschlusselement 13, insbesondere die Kupplungsteile 52, 52' in den Vertiefungen 53, 53' arretieren kann. Die Verriegelung 54 hat im Wesentlichen die Form eines Balkens, welcher um einen Drehpunkt 55 drehbar gelagert ist. Weiterhin weist die Verriegelung 54 mindestens einen Griff 57 und eine Abstützung 56 auf, welche in der ZU-Position (s. Figur 2) an eine Oberfläche des Windschutzes 16 anschlägt.

Die Verriegelung 54 und deren Zusammenwirken mit der mindestens einen Vertiefung 53, 53' sind in den Figuren 2a und 2b dargestellt. Figur 2a zeigt die Verriegelung 54 in der AUF-Position und in Figur 2b ist die ZU-Position dargestellt. In der AUF-Position kann das Verschlusselement eingesetzt oder entfernt werden, in der ZU-Position wird das Verschlusselement durch die Verriegelung 54 arretiert bzw. verriegelt.

In der AUF-Position ist die Längsachse der Verriegelung 54 gegenüber der Oberfläche 60 des Windschutzes 16 geneigt und die Abstützung 56 hat keinen Kontakt mit der Oberfläche 60. Die Verriegelung 54 ist vor den Vertiefungen 53, 53' angeordnet, welche, wie in Figur 2A zu sehen ist, aus zwei in Bezug auf ihre Längsachsen zu einander um 90° verdrehten Teilvertiefung 61, 61', 62, 62' besteht. In der AUF-Position können die Kupplungsteile 52, 52' (s. Figur 1) in diese Vertiefungen 53, 53' eingesetzt werden, wobei die Teilvertiefungen 62, 62' als Führung für die freien Enden der Kupplungsteile 52, 52' dienen, so dass das Verschlusselement im eingesetzten Zustand um die Verbindungsachse der beiden Kupplungsteile 52, 52' gedreht werden kann.

Ein Wechsel zwischen der in Figur 2A gezeigten AUF-Position zur in Figur 2B gezeigten ZU-Position der Verriegelung 54 erfolgt durch eine Drehung der balkenförmigen Verriegelung 54 um den Drehpunkt 55. Die Drehung wird gestoppt, wenn die Abstützung 56 Kontakt mit der Oberfläche 60 erhält.

Die Drehung der Verriegelung 54 kann manuell oder automatisiert erfolgen, in dem ein geeignetes Greifmittel den Griff 57 der Verriegelung 54 festhält und den Mechanismus 54 bewegt.

In der ZU-Position verdeckt die Verriegelung 54 die Teilvertiefung 62", welche in Figur 2b als durchgehende Verbindung zwischen den beiden Teilvertiefungen 61, 61' ausgestaltet ist, wodurch im eingesetzten Zustand das Verschlusselement arretiert wird.

Das Verschlusselement 13 ist in Figur 3 perspektivisch dargestellt. Das Verschlusselement 13 weist eine Platte 63, welche die Beschickungsöffnung des Wägeraums verschliessen kann, und eine abgewinkelte Verbindungsleiste 64 auf, an welcher die Kupplungsteile 52, 52' angeordnet sind. Die Kupplungsteile 52, 52' sind stiftartig ausgestaltet und ihr Durchmesser ist etwas kleiner als der der Teilvertiefung 62, 62' (s. Figur 2). Weiterhin ist hier die bereits erwähnte Drehachse AA des Verschlusselements 13 dargestellt, welche der Verbindungsachse zwischen den Kupplungsteilen 52, 52' entspricht.

Figur 4 zeigt eine Teilansicht einer elektronischen Waage 1 im Schnitt. Die Waage 1 weist ein Gehäuse 2 auf, in dem unter anderem die Wägemechanik angeordnet ist, welche mit einem Lastträger 3 verbunden ist. Der Lastträger 3 weist an seinem freien Ende eine erste Aufnahme 4 für das Wägegut 5 auf. Das Gehäuse 2 der Waage 1 weist ein hervorstehendes Bodenelement 31 auf, auf dem ein Stellglied 12 in Form eines Zylinders mit kreisförmigen Querschnitt und einer Grundplatte mit einer mittig angeordneten Durchführung für den Lastträger 3 sowie einer als Kurvenscheibe ausgestalteten Abschlusskante 17 angeordnet ist. Das Stellglied 12 stellt einen Teil eines Antriebs dar, welcher ferner ein im Bodenelement 31 angeordnetes Getriebe und einen im Gehäuse 2 angeordneten Motor aufweist. Das Stellglied ist drehbar auf dem Bodenelement 31 angeordnet.

Zum Schutz vor Verschmutzung, ist das Stellglied 12 mit einem Wandelement 28 ummantelt, welches zwischen dem Bodenelement 31 und einem Windschutz 16 befestigt ist.

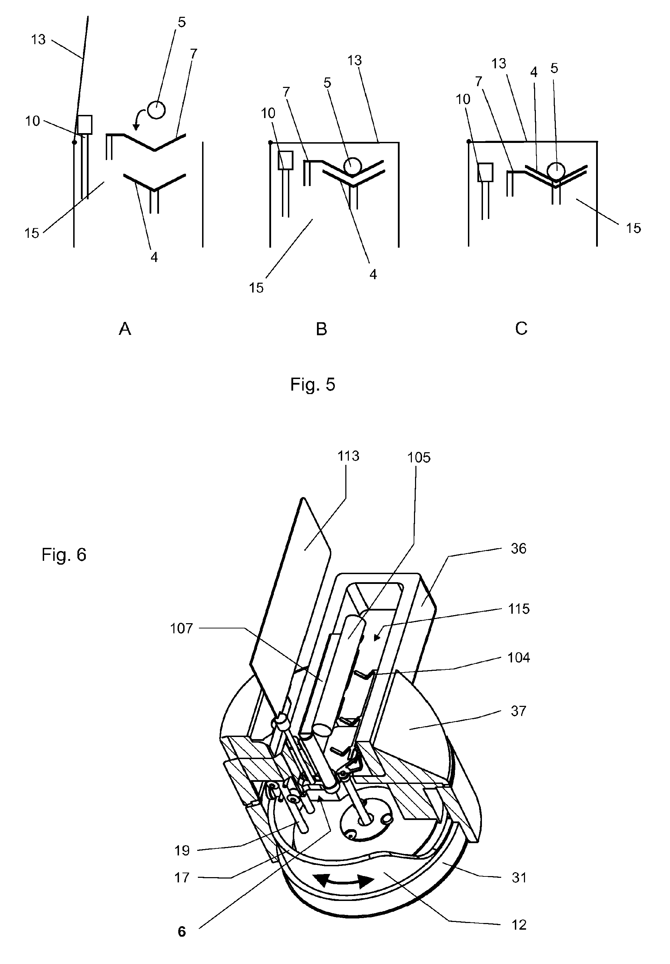

Im Inneren des zylinderförmigen Stellglieds 12 ist eine Trägerstruktur (s. Abb. 6) angeordnet. Diese Trägerstruktur weist eine Bodenplatte 23 mit einer Durchführung für den Lastträger 3 auf. An der Bodenplatte 23 sind zwei beabstandete Führungsstangen 19 befestigt, deren freie Enden in der Regel über die Kante 17 des Stellglieds 12 hinausragen. Die Führungsstangen 19 dienen als Vertikalführung für eine Transfereinrichtung 6.

Auf der Bodenplatte 23 ist ein weiteres Wandelement 11 angeordnet, welches als zusätzlicher Träger für den Windschutz 16 dient. Das Wandelement 11 hat eine im Wesentlichen zylindrische Form mit einer dem Gehäuse 2 zugewandten Aussparung, in welcher die Führungsstangen 19 angeordnet sind und an welcher das Stellglied 12 vorbeibewegt wird.

Die Transfereinrichtung 6 besteht aus einem zwischen den Führungsstangen 19 angeordnetem Führungsblock 20, einem mit dem Führungsblock 20 verbundenen horizontalen Träger 9 und einem mit dem horizontalen Träger 9 verbundenen vertikalen Träger 8. Das freie Ende des vertikalen Träger 8 trägt eine zweite Aufnahme 7 für das Wägegut 5.

An zwei gegenüberliegenden Seiten des Führungsblocks 20 sind Gleitmittel 21 in Form von je einer Rolle und einem Stift angebracht, zwischen denen die Führungsstangen 19 verlaufen. Die Gleitmittel 21 ermöglichen eine weitestgehend reibungslose vertikale Verschiebung der Transfereinrichtung entlang der Führungstangen 19.

Weiterhin ist am Führungsblock 20 ein Übertragungsmittel 18 befestigt. Das Übertragungsmittel 18 ist in diesem Ausführungsbeispiel eine Rolle, welche auf der Kante 17 des Stellglieds 12 entlang läuft, wenn sich dieses an der Transfereinrichtung 6 vorbei bewegt.

Über den Wandelementen 11, 28 erstreckt sich der Windschutz 16, welcher einen Wägeraum 15 umschliesst. Der Boden des Wägeraums 15 weist mindestens eine Durchführung für den Lastträger 3 sowie den vertikalen Träger 8 der Transfereinrichtung 6 auf. Der Wägeraum 15 weist ferner eine Beschickungsöffnung 14 auf, welche durch ein bewegliches Verschlusselement 13 in Form einer Klappe verschliessbar ist. Das Verschlusselement 13 ist um eine dem Gehäuse 2 zugewandte Achse schwenkbar oder klappbar. Das Verschlusselement 13 ist austauschbar und kann mittels der Verriegelung 54 arretiert werden.

In Figur 4 ist eine erste Position, die Beschickungsposition, zwischen Lastträger 3 und Transfereinrichtung 6 dargestellt, in welcher deren Aufnahmen 4, 7 einen maximalen vertikalen Abstand zueinander haben und das Stellglied 12 so ausgerichtet ist, dass sich das Übertragungselement 18 auf der Kante 17 im einem Teil des Stellglieds 12 mit der grössten vertikalen Ausdehnung befindet.

In dieser Position kann das Wägegut 5 bei geöffnetem Wägeraum 15 auf die Aufnahme 7 der Transfereinrichtung 6 aufgelegt und/oder von dieser abgenommen werden, ohne dass eine zusätzliche Kraft auf den Lastträger 3 ausgeübt wird. Das Verschlusselement 13 wird durch eine auf dem horizontalen Träger 9 befestigte Stange 10 geöffnet und offen gehalten. Der Antrieb bewirkt sowohl eine Hubbewegung der Transfereinrichtung 6 als auch eine Hubbewegung der Stange 10, so dass diese bei einer Bewegung entgegen der Lastrichtung von unten gegen das Verschlusselement 13 gedrückt wird und das Verschlusselement 13 genauer die Beschickungsöffnung 14 öffnet. Lässt die gegen die Lastrichtung ausgeübte Kraft auf das Verschlusselement 13 nach, wird die Beschickungsöffnung 14 wieder verschlossen.

Figur 5 zeigt stark schematisiert drei verschiedene Positionen, in denen die mit dem Lastträger 3 verbundene Aufnahme 4 und die mit der Transfereinrichtung 6 verbundene Aufnahme 7 durch eine relative Bewegung der Transfereinrichtung 6 zum Lastträger 3 positioniert werden können.

Figur 5A zeigt eine erste Position, in der die beiden Aufnahmen 4, 7 einen maximalen Abstand zu einander aufweisen und das Verschlusselement 13 geöffnet ist, so dass ein Wägegut 5 auf der Aufnahme 7 platziert werden kann.

Figur 5B zeigt eine zweite Position, in welcher der vertikale Abstand zwischen den Aufnahmen 4, 7 durch eine relative Bewegung des Lastträgers zur Transfereinrichtung verringert wurde und gleichzeitig der Wägeraum 15 durch das Verschlusselement 13 verschlossen wurde. In dieser Position kann unter anderem der Nullabgleich der Waage im entlasteten Zustand durchgeführt und zusätzlich kann eine Überprüfung der Funktionsfähigkeit der Waage und/oder verschiedener Wägeparameter durchgeführt werden.

Figur 5C zeigt als dritte Position die Wägeposition, in welcher die beiden Aufnahmen 4, 7 sich durcheinander hindurch bewegt haben und durch diese Bewegung das Wägegut 5 von der Aufnahme 7 auf die Aufnahme 4 transferiert wurde. Ein Wechsel zwischen der zweiten und dritten Position erfolgt bei geschlossenem Wägeraum 15.

Ein Wechsel von der ersten in die zweite Position wird durch eine Drehbewegung des Stellglieds 12 an der Transfereinrichtung 6 vorbei bewirkt. Das Stellglieds 12 wird an der Führungsvorrichtung 6 und den Führungsstangen 19 vorbei gedreht, dabei folgt, das Übertragungselement 18 dem Kurvenverlauf der Kante 17 und die Transfereinrichtung 6 wird in Lastrichtung abgesenkt und nähert sich dem Lastträger 3. Das Stellglied ist so gestaltet, dass eine flüssige und im Wesentlichen ruckfreie Bewegung des Übertragungselements 18 und damit eine flüssige und im Wesentlichen ruckfreie Hubbewegung der Transfereinrichtung 6 ausgelöst wird. Gleichzeitig wird bei einem Wechsel von der ersten zur zweiten Position der Wägeraum 15 durch das Verschlusselement 13 verschlossen, da die Hubbewegung der Transfereinrichtung 6 gleichzeitig eine Hubbewegung der Stange 10 bedingt. Wird die Transfereinrichtung 6 und damit die Stange 10 in Lastrichtung abgesenkt, so wird der Kontakt zwischen Verschlusselement 13 und Stange 10 gelöst und der Wägeraum 15 durch das Verschlusselement 13 verschlossen.

Beim Wechsel von der zweiten zur dritten Position wurde das Stellglied 12 weiterbewegt, so dass sich das Übertragungselement 18 und damit die Transfereinrichtung 6 nun maximal in Relation zum Lastträger abgesenkt wurden. Die Aufnahme 7 der Transfereinrichtung 6 hat sich berührungsfrei nach unten durch die Aufnahme 4 des Lastträgers 3 hindurch bewegt und so das Wägegut 5 an die Aufnahme 4 des Lastträger 3 übergeben, so dass das Gewicht des Wägeguts 5 ermittelt werden kann.

Die drei Positionen zeichnen sich durch den Abstand der Aufnahme 4 zur Aufnahme 7 sowie dadurch aus, dass der Wägeraum 15 geöffnet oder geschlossen ist. Sowohl das Öffnen und/oder Schliessen des Wägeraums, als auch der Abstand der Aufnahmen 4, 7 zueinander wird durch die Drehbewegung des Stellglieds 12 bedingt. Das Stellglied 15 hat im Wesentlichen die Form eines schräg abgeschnittenen Zylinders mit geschwungenen Übergängen, auf dessen Kante 17 das Übertragungselement 18 geführt wird und die durch den Antrieb verursachte Drehbewegung des Stellglieds 12 in eine lineare Hubbewegung der Transfereinrichtung 6 sowie der Strange 10 umwandelt.

Der Wägeraum 15 ist ebenso wie die Aufnahmen 4, 7 an die Dimension des Wägeguts 5 angepasst, damit die Anpassung der Waage und insbesondere des Wägeraums 15 an die Umgebung möglichst rasch erfolgen kann.

Prinzipiell wäre es auch möglich entweder nur den Lastträger oder nur die Transfereinrichtung oder sowohl den Lastträger als auch die Transfereinrichtung zu bewegen, wobei eine geführte Hubbewegung der Transfereinrichtung bevorzugt wird.

Die in den Figuren 1 und 4 gezeigte Waage weist einen Windschutz 16 auf, welcher einen Wägeraum 15 mit einem Einsatz 50 umschliesst und für kleine Wägegüter ausgelegt ist. In Figur 6 ist ein weiterer Windschutz mit einem vergrösserten Wägeraum 115 gezeigt, welcher ebenfalls mit einem entsprechend angepassten Einsatz versehen werden kann. Der hier gezeigte Windschutz weist eine Haltestruktur 37 auf, in welche ein Wägeraumelement 36 eingesetzt ist, welches den Wägeraum 115 definiert und mit einem Verschlusselement 113 verschlossen werden kann. Weiterhin weist die Waage an die Grösse des Wägeguts angepasste Aufnahmen 104, 107 auf.

Sollen grössere Güter 105 verwogen werden, so bietet es sich an, den in Figur 6 gezeigten zweitteiligen Windschutz mit austauschbarem Wägeraumelement 36 und einer Haltestruktur 37 zu verwenden. Das Wägeraumelement 36 ist im Wesentlichen kastenförmig und kann durch ein bewegliches Verschlusselement 113 verschlossen werden. Ebenso können die Aufnahmen 104, 107 an die Grösse des zu wägenden Guts 105 angepasst werden. Diese Ausführungsform ist besonders geeignet für die Wägung unterschiedlich langer Güter, da in Abhängigkeit des zu bestimmenden Wägeguts das Wägeraumelement 36 sowie die Aufnahmen 104, 107 einfach gegen in der Länge angepasste Elemente ausgetauscht werden können. Für die Wägung breiter oder anders geformter Güter kann gegebenenfalls der gesamte Windschutz, insbesondere die Haltestruktur 37, das Wägeraumelement 36, ein darin anordnenbarer Einsatz, sowie das Verschlusselement 113 ausgetauscht werden.

Neben den in den Figuren gezeigten im Wesentlichen rechteckigen Wägeräumen, ist es selbstverständlich möglich den Wägeraum, das Verschlusselement, den Einsatz sowie die Aufnahmen an beliebige Wägegüter anzupassen. Der Wägeraum kann beispielsweise im Wesentlichen dreieckig, viereckig, vieleckig, rund und/oder oval ausgestaltet werden und es können unterschiedliche Aufnahmen verwendet werden, wobei eine Vielzahl verschiedener Aufnahmen bereits bekannt sind.

Die Verschliesselemente für diese Wägeraumtypen können ebenfalls mit Kupplungsteilen versehen werden, so dass sie austauschbar mit der Waage verbunden werden können.

Es ist weiterhin vorteilhaft, nicht nur den Wägeraum durch Verwendung eines geeigneten Windschutzes an ein zu bestimmendes Wägegut anzupassen, sondern zusätzlich auch die Dimension und Form der Aufnahmen der Transfereinrichtung und des Lastträgers an ein zu bestimmendes Wägegut anzupassen. Ebenso ist es denkbar den Wägeraum mit weiteren Beschickungsöffnungen zu versehen oder diese an einer anderen Stelle, beispielsweise seitlich, anzuordnen.

### Bezugszeichenliste

- 1: Waage
- 2: Gehäuse
- 3: Lastträger
- 4, 104: erste Aufnahme
- 5, 105: Wägegut
- 6: Transfereinrichtung
- 7: zweite Aufnahme
- 8: vertikaler Träger
- 9: horizontaler Träger
- 10: Stange
- 11: Wandelement
- 12: Stellglied
- 13, 113: Verschlusselement
- 14: Beschickungsöffnung
- 15, 115: Wägeraum
- 16: Windschutz
- 17,117: Kante
- 18: Rolle
- 19: Führungsstange
- 20: Führungsblock
- 21: Gleitmittel
- 23: Bodenplatte
- 28: Wandelement
- 31: Bodenelement
- 36: Wägeraumelement
- 50: Einsatz
- 51: Aussparung
- 52, 52': Kupplungsteil
- 53, 53': Vertiefung
- 54: Verriegelung
- 55: Drehpunkt
- 56: Abstützung
- 57: Griff
- 58: Ecke
- 59: Durchführung
- 60: Oberfläche
- 61, 61': Teilvertiefung
- 62, 62', 62": Teilvertiefung
- 63: Platte
- 64: Verbindungsleiste

## Patentansprüche

1. Elektronische Waage aufweisend einen Lastträger (3) mit einer ersten Aufnahme (4), eine Transfereinrichtung (6) mit einer zweiten Aufnahme (7), und einen Wägeraum (15), welcher einen Einsatz (50) aufweist, wobei eine Beschickungsöffnung (14) des Wägeraum (15) mit einem Verschlusselement (13) verschliessbar ist, **dadurch gekennzeichnet, dass** die erste Aufnahme (4) und die zweite Aufnahme (7) während des Wiegens im Wägeraum (15), insbesondere im Einsatz (50), angeordnet sind, und dass der Einsatz (50) und/oder das Verschlusselement (13) manuell oder automatisiert austauschbar ist.

2. Elektronische Waage nach Anspruch 1, **dadurch gekennzeichnet, dass** das Verschlusselement (13) mindestens ein Kupplungsteil (52, 52') aufweist.

3. Elektronische Waage nach einem der Ansprüche 1 oder 2, **dadurch gekennzeichnet, dass** die Waage mindestens eine Vertiefung (53, 53') zur Aufnahme des mindestens einen Kupplungsteils (52, 52') aufweist.

4. Elektronische Waage nach Anspruch 3, **dadurch gekennzeichnet, dass** das Kupplungsteil (52, 52') in der Vertiefung (53, 53') mit einer Verriegelung (54) arretierbar ist.

5. Elektronische Waage nach Anspruch 4, **dadurch gekennzeichnet, dass** die Verriegelung (54) als drehbar gelagerter Balken ausgestaltet ist und mindestens einen Griff (57) und eine Abstützung (56) aufweist.

6. Elektronische Waage nach einem der Ansprüche 1 bis 5, **dadurch gekennzeichnet, dass** der Wägeraum (15) mindestens eine Aussparung (51) aufweist, welche dem Einsetzen oder Entfernen des Einsatzes (50) dient.

7. Elektronische Waage nach einem der Ansprüche 1 bis 6, **dadurch gekennzeichnet, dass** die Waage ferner einen Antrieb für das Betätigen des Verschlusselements (13) aufweist.

8. Elektronische Waage nach Anspruch 7, **dadurch gekennzeichnet, dass** der Antrieb ein Stellglied (12) aufweist und mit einem Übertragungselement (18) zusammenwirkt, wodurch die Transfereinrichtung (6) in Relation zum Lastträger (3) bewegt werden kann.

9. Elektronische Waage nach Anspruch 8, **dadurch gekennzeichnet, dass** das Stellglied (12) eine Führung (17) für das Übertragungselement (18) aufweist.
